# EUROPEAN PATENT SPECIFICATION

(11) **EP 4 304 284 B1**
(45) Date of publication and mention of the grant of the patent: **12.03.2025**
(21) Application number: 23168979.5
(22) Date of filing: 20.04.2023
(51) Int. Cl.: H04W 74/0833, H04L 1/08, H04W 56/00, H04W 74/00

(54) **ENHANCED SIGNALING OF MESSAGES IN RANDOM CHANNEL ACCESS PROCEDURE**
VERBESSERTE SIGNALISIERUNG VON NACHRICHTEN IN EINEM ZUFALLSKANALZUGRIFFSVERFAHREN
SIGNALISATION AMÉLIORÉE DE MESSAGES DANS UNE PROCÉDURE D'ACCÈS À UN CANAL ALÉATOIRE

(30) Priority: 04.07.2022 FI 20225626
(43) Date of publication of application: 10.01.2024
(73) Proprietor: Nokia Technologies Oy, 02610 Espoo (FI)
(72) Inventor: MARCONE, Alessio, Munich (DE); NHAN, Nhat-Quang, Reims (FR); MASO, Marco, Issy les Moulineaux (FR)
(74) Representative: Nokia EPO representatives

(56) References cited:
- EP-A1- 3 780 871
- WO-A1-2021/231816
- US-A1- 2022 046 714

## Description

### TECHNICAL FIELD

The present disclosure relates generally to the field of wireless communications, and particularly to an approach for a User Equipment (UE) to signal, via a first message in a Random Access Channel (RACH) procedure (e.g., Message 1 or Msg1), information that assists a network node (e.g., gNB) in scheduling the remaining messages (e.g., Message 2 or Msg2) of the RACH procedure.

### BACKGROUND

In the fifth generation (5G) New Radio (NR) communication technology, two Contention Based Random Access (CBRA) procedures are supported, i.e., 4-step RACH and 2-step RACH. The 4-step RACH procedure requires two round-trip cycles between a UE and a network node (e.g., gNB), which not only increases a network latency but also incurs additional control-signaling overhead. The 2-step RACH procedure allows one to reduce the network latency and the control-signaling overhead by providing a single round trip cycle between the UE and the network node. This is achieved by combining a preamble (i.e., Message 1 or Msg1) and a scheduled PUSCH transmission (i.e., Message 3 or Msg3) into a single message from the UE, which is known as Message A or MsgA. Then, by combining an RA respond (i.e., Message 2 or Msg2) and a contention resolution message (i.e., Message 4 or Msg4) into a single message from the gNB to the UE, which is known as Message B or MsgB.

In some scenarios, the Msg1 (also referred to as a Physical Random Access Channel (PRACH)) or the MsgA may be transmitted from the UE to the network node in a repetitive manner. For example, in the context of the 4-step RACH procedure, the repetition of the Msg1 was studied and standardized in the Long-Term Evolution (LTE) standard to improve the coverage of the PRACH channel. It is well-known that the repetitions of a channel allow a receiver (the network node in this case) to collect more energy from a transmitting entity (the UE in this case), thereby increasing a receiving Signal-to-Noise Ratio (SNR) and hence the detection or decoding performance. It is worth noting that the 5G NR currently does not support the repetition of the Msg1 nor the MsgA.

The network node may select a Synchronization Signal (SS)/Physical Broadcast Channel (PBCH) block selected by the UE in each repetitive Msg1 transmission for future Msg2 transmission. However, such a choice of the SS/PBCH block can sometimes be sub-optimal from the UE's point of view. In this regard, there is a need for an approach which would allow the UE to inform, via the Msg1, the network node of a preferred SS/PBCH block to be used for Msg2 (or MsgB) transmission. The following documents provide background prior art in the field of random access parameter settings and use:
WO 2021/231816 A1 (CONVIDA WIRELESS LLC [US]) 18 November 2021
US 2022/046714 A1 (ZHOU HUA [US] ET AL) 10 February 2022
EP 3780871 A1 (COMCAST CABLE COMM LLC [US]) 17 February 2021.

### SUMMARY

This summary is provided to introduce a selection of concepts in a simplified form that are further described below in the detailed description. This summary is not intended to identify key features of the present disclosure, nor is it intended to be used to limit the scope of the present disclosure.

It is an objective of the present disclosure to provide a technical solution that allows a user device (e.g., UE) to inform, via a set of repetitions of Msg1, a network node (e.g., gNB) of a preferred SS/PBCH block to be used for Msg2 (or MsgB) transmission.

The objective above is achieved by the features of the independent claims in the appended claims. Further embodiments and examples are apparent from the dependent claims, the detailed description and the accompanying drawings.

According to a first aspect, a user device is provided. The user device comprises at least one processor and at least one memory. The at least one memory comprises a computer program code. The at least one memory and the computer program code are configured to, with the at least one processor, cause the user device to operate at least as follows. At first, the user device receives a set of SSBs from a network node. Each SSB of the set of SSBs is characterized by a parameter. Further, the user device receives RACH configuration information from the network node. The RACH configuration information comprises a set of repetitions patterns and a set of metrics. Each repetition pattern of the set of repetition patterns is configured to cause the user device to transmit a set of repetitions of a message 1 (Msg1) to the network node. Each metric of the set of metrics is associated with one repetition pattern of the set of repetitions patterns and represents: (i) a difference between two values of the parameter for one SSB of the set of SSBs; or (ii) a difference between the value of the parameter for one SSB of the set of SSBs and the value of the parameter for another SSB of the set of SSBs. Then, the user device selects a metric from the set of metrics based on the difference (i) or (ii). Next, the user device selects a repetition pattern from the set of repetition patterns based on the metric. After that, the user device transmits the set of repetitions of the Msg1 to the network node based on the repetition pattern. By so doing, the user device may implicitly signal a preferred second SSB (which corresponds to a certain metric) to the network node, thereby assisting the network node in scheduling subsequent messages (e.g., the Msg2 or MsgB) of the RACH procedure.

In one example embodiment of the first aspect, each repetition pattern of the set of repetition patterns is configured to cause the user device to transmit each next repetition of the set of repetitions of the Msg1 by using a preamble for a previous repetition of the set of repetitions of the Msg1 but shifted by a cyclic shift. The cyclic shift is different for each repetition pattern of the set of repetition patterns. Given that each repetition pattern is associated with one metric of the set of metrics, this means that each cyclic shift as such is either associated with one SSB of the set of SSBs which may potentially be used for the Msg2 or associated with a difference between the values of the parameter for one SSB of the set of SSBs or the values of the parameters for two SSBs of the set of SSBs. Therefore, by using a certain cyclic shift across the preambles for the repetitions of the Msg1, the user device may implicitly indicate, to the network node, which SSB of the set of SSBs is preferred for the Msg2, as well as provide, to the network node, information (e.g., an RSRP difference) which may enhance the scheduling of the remaining messages in the RACH procedure (e.g., Msg2/Msg3/MsgB) on the network node side.

In one example embodiment of the first aspect, each repetition pattern of the set of repetition patterns is characterized by a different sequence of cyclic shifts. In this embodiment, each repetition pattern of the set of repetition patterns is configured to cause the user device to transmit each next repetition of the set of repetitions of the Msg1 by using a preamble for a previous repetition of the set of repetitions of the Msg1 but shifted each time by a different cyclic shift of the sequence of cyclic shifts. In other words, the user device is caused to use a new cyclic shift whenever a new repetition of the Msg1 is to be transmitted to the network node. The user device may apply the cyclic shifts sequentially, i.e., one by one, to the preambles for next repetitions of the Msg1. By so doing, the user device may also implicitly indicate, to the network node, which SSB of the set of SSBs is preferred for the Msg2, as well as provide, to the network node, information (e.g., an RSRP difference) which may enhance the scheduling of the remaining messages in the RACH procedure (e.g., Msg2/Msg3/MsgB) on the network node side.

In one example embodiment of the first aspect, the sequence of cyclic shifts is characterized by a sequence size. In this embodiment, if a number of repetitions in the set of repetitions of the Msg1 is larger than the sequence size, each repetition pattern of the set of repetition patterns is further configured to cause the user device to read the sequence of cyclic shifts in a cyclic fashion. By so doing, it is possible to use the sequence of cyclic shifts repeatedly in order to implicitly signal the preferred SSB to the network node until all repetitions of the Msg1 are transmitted to the network node.

In one example embodiment of the first aspect, each repetition pattern of the set of repetition patterns is characterized by a different sequence of preambles. In this embodiment, each repetition pattern of the set of repetition patterns is configured to cause the user device to transmit the set of repetitions of the Msg1 by using at least one preamble from the sequence of preambles. By so doing, the user device may also implicitly indicate, to the network node, which SSB of the set of SSBs is preferred for the Msg2.

In one example embodiment of the first aspect, each repetition pattern of the set of repetition patterns is configured to cause the user device to transmit each repetition of the set of repetitions of the Msg1 by using a different preamble from the sequence of preambles. In this embodiment, if a number of repetitions in the set of repetitions of the Msg1 is larger than the sequence size, each repetition pattern of the set of repetition patterns is further configured to cause the user device to read the sequence of preambles in a cyclic fashion. By so doing, it is possible to use the sequence of preambles repeatedly in order to implicitly signal the preferred SSB to the network node until all repetitions of the Msg1 are transmitted to the network node.

In one example embodiment of the first aspect, each repetition pattern of the set of repetition patterns is configured to cause the user device to transmit the set of repetitions of the Msg1 by using a different or same sequence of RACH occasions (ROs). This may provide an alternative or additional way for the user device to implicitly indicate, to the network node, which SSB of the set of SSBs is preferred for the Msg2.

In one example embodiment of the first aspect, the RACH configuration information is presented as a table comprising multiple rows each indicating an association between one repetition pattern of the set of repetition patterns and one metric of the set of metrics. By using such a table, the user device may easily and quickly determine how to signal the preferred SSB to the network node.

In one example embodiment of the first aspect, the parameter comprises at least one of an SSB index, a Reference Signal Received Power (RSRP), a Received Signal Strength Indicator (RSSI) and a Reference Signal Received Quality (RSRQ). By using such a parameter, the user device may efficiently inform the network node of the preferred SSB for the Msg2.

In one example embodiment of the first aspect, the RACH procedure is one of a 4-step RACH procedure and a 2-step RACH procedure. This means that the user device thus configured may be applied in different RACH procedures, which makes it more flexible in use.

According to a second aspect, a network node is provided. The network node comprises at least one processor and at least one memory. The at least one memory comprises a computer program code. The at least one memory and the computer program code are configured to, with the at least one processor, cause the network node to operate at least as follows. At first, the network node transmits a set of SSBs to a user device. Each SSB of the set of SSBs is characterized by a parameter. Further, the network node generates RACH configuration information that comprises a set of repetitions patterns and a set of metrics. Each repetition pattern of the set of repetition patterns is configured to cause the user device to transmit a set of repetitions of a Msg1 to the network node. Each metric of the set of metrics is associated with one repetition pattern of the set of repetitions patterns and represents: (i) a difference between two values of the parameter for one SSB of the set of SSBs; or (ii) a difference between the value of the parameter for one SSB of the set of SSBs and the value of the parameter for another SSB of the set of SSBs. Then, the network node transmits the RACH configuration information to the user device. Next, the network node receives the set of repetitions of the Msg1 from the user device. By so doing, the network node may be informed of a preferred SSB (which corresponds to a certain metric) via a certain repetition pattern selected by the user device for the Msg1.

According to a third aspect, a method for operating a user device is provided. The method starts with the step of receiving a set of SSBs from a network node. Each SSB of the set of SSBs is characterized by a parameter. The method further proceeds to the step of receiving RACH configuration information from the network node. The RACH configuration information comprises a set of repetitions patterns and a set of metrics. Each repetition pattern of the set of repetition patterns is configured to cause the user device to transmit a set of repetitions of a Msg1 to the network node. Each metric of the set of metrics is associated with one repetition pattern of the set of repetitions patterns and represents: (i) a difference between two values of the parameter for one SSB of the set of SSBs; or (ii) a difference between the value of the parameter for one SSB of the set of SSBs and the value of the parameter for another SSB of the set of SSBs. Then, the method proceeds to the step of selecting a metric from the set of metrics based on the difference (i) or (ii). Next, the method goes on to the step of selecting a repetition pattern from the set of repetition patterns based on the metric. Next, the method goes on to the step of transmitting the set of repetitions of the Msg1 to the network node based on the repetition pattern. By so doing, the user device may implicitly signal a preferred SSB (which corresponds to a certain metric) to the network node, thereby assisting the network node in scheduling subsequent messages (e.g., the Msg2 or MsgB) of the RACH procedure.

According to a fourth aspect, a method for operating a network node is provided. The method starts with the step of transmitting a set of SSBs to a user device. Each SSB of the set of SSBs is characterized by a parameter. The method further proceeds to the step of generating RACH configuration information that comprises a set of repetitions patterns and a set of metrics. Each repetition pattern of the set of repetition patterns is configured to cause the user device to transmit a set of repetitions of a Msg1 to the network node. Each metric of the set of metrics is associated with one repetition pattern of the set of repetitions patterns and represents: (i) a difference between two values of the parameter for one SSB of the set of SSBs; or (ii) a difference between the value of the parameter for one SSB of the set of SSBs and the value of the parameter for another SSB of the set of SSBs. Then, the method proceeds to the step of transmitting the RACH configuration information to the user device. Next, the method goes on to the step of receiving the set of repetitions of the Msg1 from the user device. By so doing, the network node may be informed of a preferred SSB (which corresponds to a certain metric) via a certain repetition pattern selected by the user device for the Msg1.

According to a fifth aspect, a computer program product is provided. The computer program product comprises a computer-readable storage medium that stores a computer code. Being executed by at least one processor, the computer code causes the at least one processor to perform the method according to the third aspect. By using such a computer program product, it is possible to simplify the implementation of the method according to the third aspect in any user device, like the user device according to the first aspect.

According to a sixth aspect, a computer program product is provided. The computer program product comprises a computer-readable storage medium that stores a computer code. Being executed by at least one processor, the computer code causes the at least one processor to perform the method according to the fourth aspect. By using such a computer program product, it is possible to simplify the implementation of the method according to the fourth aspect in any network node, like the network node according to the second aspect.

According to a seventh aspect, a user device is provided. The user device comprises a means for receiving a set of SSBs from a network node. Each SSB of the set of SSBs is characterized by a parameter. The user device further comprises a means for receiving RACH configuration information from a network node. The RACH configuration information comprises a set of repetitions patterns and a set of metrics. Each repetition pattern of the set of repetition patterns is configured to cause the user device to transmit a set of repetitions of a Msg1 to the network node. Each metric of the set of metrics is associated with one repetition pattern of the set of repetitions patterns and represents: (i) a difference between two values of the parameter for one SSB of the set of SSBs; or (ii) a difference between the value of the parameter for one SSB of the set of SSBs and the value of the parameter for another SSB of the set of SSBs. The UE further comprises a means for selecting a metric from the set of metrics based on the difference (i) or (ii), and a means for selecting a repetition pattern from the set of repetition patterns based on the metric. The UE further comprises a means for transmitting the set of repetitions of the Msg1 to the network node based on the repetition pattern. By so doing, the user device may implicitly signal a preferred SSB (which corresponds to a certain metric) to the network node, thereby assisting the network node in scheduling subsequent messages (e.g., the Msg2 or MsgB) of the RACH procedure.

According to an eighth aspect, a network node is provided. The network node comprises a means for transmitting a set of SSBs to a user device. Each SSB of the set of SSBs is characterized by a parameter. The network node further comprises a means for generating RACH configuration information that comprises a set of repetitions patterns and a set of metrics. Each repetition pattern of the set of repetition patterns is configured to cause the user device to transmit a set of repetitions of a Msg1 to the network node. Each metric of the set of metrics is associated with one repetition pattern of the set of repetitions patterns and represents: (i) a difference between two values of the parameter for one SSB of the set of SSBs; or (ii) a difference between the value of the parameter for one SSB of the set of SSBs and the value of the parameter for another SSB of the set of SSBs. The network node further comprises a means for transmitting the RACH configuration information to the user device. The network node further comprises a means for receiving the set of repetitions of the Msg1 from the user device. By so doing, the network node may be informed of a preferred SSB (which corresponds to a certain metric) via a certain repetition pattern selected by the user device for the Msg1.

Other features and advantages of the present disclosure will be apparent upon reading the following detailed description and reviewing the accompanying drawings.

### BRIEF DESCRIPTION OF THE DRAWINGS

The present disclosure is explained below with reference to the accompanying drawings in which:
FIG. 1 shows an interaction diagram that explains the interaction between a user device and a gNB in case of the 4-step RACH procedure;
FIG. 2 explains a Coverage Enhancement (CE) level-based approach which may be used by a user device to select a number of repetitions of a Msg1 in accordance with the LTE standard;
FIG. 3 explains one scenario in which the CE level-based approach of FIG. 2 may lead to a sub-optimal solution;
FIG. 4 explains another scenario in which the CE level-based approach of FIG. 2 may lead to a sub-optimal solution;
FIG. 5 shows a block diagram of a user device in accordance with one example embodiment;
FIG. 6 shows a flowchart of a method for operating the user device of FIG. 5 in accordance with one example embodiment;
FIG. 7 shows one example of how to apply a cyclic shift delta_CS to a preamble for each Msg1 repetition to implicitly signal a preferred Synchronization Signal Block (SSB) for a Msg 2 from the user device of FIG. 5 to a network node;
FIG. 8 shows one example of how to apply a sequence of cyclic shifts delta_CS to the preamble for each Msg1 repetition to implicitly signal the preferred SSB for the Msg 2 from the user device of FIG. 5 to the network node;
FIG. 9 shows one example of how to apply a certain RACH occasion (RO) pattern to the preamble for each Msg1 repetition to implicitly signal the preferred SSB for the Msg 2 from the user device of FIG. 5 to the network node;
FIG. 10 shows a block diagram of a network node in accordance with one example embodiment;
FIG. 11 shows a flowchart of a method for operating the network node of FIG. 10 in accordance with one example embodiment; and
FIG. 12 shows an interaction diagram that explains the interaction between a user device and a gNB in case of the RACH procedure in accordance with one exemplary embodiment.

### DETAILED DESCRIPTION

Various embodiments of the present disclosure are further described in more detail with reference to the accompanying drawings. However, the present disclosure can be embodied in many other forms and should not be construed as limited to any certain structure or function discussed in the following description. In contrast, these embodiments are provided to make the description of the present disclosure detailed and complete.

According to the detailed description, it will be apparent to the ones skilled in the art that the scope of the present disclosure encompasses any embodiment thereof, which is disclosed herein, irrespective of whether this embodiment is implemented independently or in concert with any other embodiment of the present disclosure. For example, the apparatuses and methods disclosed herein can be implemented in practice by using any numbers of the embodiments provided herein. Furthermore, it should be understood that any embodiment of the present disclosure can be implemented using one or more of the elements presented in the appended claims.

Unless otherwise stated, any embodiment recited herein as "example embodiment" should not be construed as preferable or having an advantage over other embodiments.

According to the example embodiments disclosed herein, a user device may refer either to a User Equipment (UE) or any other entity (e.g., Medium Access Control entity) in a wireless communication network. The UE may refer to an electronic computing device that is configured to perform wireless communications. The UE may be implemented as a mobile station, a mobile terminal, a mobile subscriber unit, a mobile phone, a cellular phone, a smart phone, a cordless phone, a personal digital assistant (PDA), a wireless communication device, a desktop computer, a laptop computer, a tablet computer, a gaming device, a netbook, a smartbook, an ultrabook, a medical mobile device or equipment, a biometric sensor, a wearable device (e.g., a smart watch, smart glasses, a smart wrist band, etc.), an entertainment device (e.g., an audio player, a video player, etc.), a vehicular component or sensor (e.g., a driver-assistance system), a smart meter/sensor, an unmanned vehicle (e.g., an industrial robot, a quadcopter, etc.) and its component (e.g., a self-driving car computer), industrial manufacturing equipment, a global positioning system (GPS) device, an Internet-of-Things (IoT) device, an Industrial loT (IIoT) device, a machine-type communication (MTC) device, a group of Massive loT (MloT) or Massive MTC (mMTC) devices/sensors, or any other suitable mobile device configured to support wireless communications. In some embodiments, the UE may refer to at least two collocated and inter-connected UEs thus defined.

As used in the example embodiments disclosed herein, a network node may refer to a fixed point of communication/communication node for a user device in a particular wireless communication network. More specifically, the network node may be used to connect the user device to a Data Network (DN) through a Core Network (CN) and may be referred to as a base transceiver station (BTS) in terms of the 2G communication technology, a NodeB in terms of the 3G communication technology, an evolved NodeB (eNodeB or eNB) in terms of the 4G communication technology, and a gNB in terms of the 5G New Radio (NR) communication technology. The network node may serve different cells, such as a macrocell, a microcell, a picocell, a femtocell, and/or other types of cells. The macrocell may cover a relatively large geographic area (e.g., at least several kilometers in radius). The microcell may cover a geographic area less than two kilometers in radius, for example. The picocell may cover a relatively small geographic area, such, for example, as offices, shopping malls, train stations, stock exchanges, etc. The femtocell may cover an even smaller geographic area (e.g., a home). Correspondingly, the network node serving the macrocell may be referred to as a macro node, the network node serving the microcell may be referred to as a micro node, and so on.

According to the example embodiments disclosed herein, a wireless communication network, in which a user device and a network node communicate with each other, may refer to a cellular or mobile network, a Wireless Local Area Network (WLAN), a Wireless Personal Area Networks (WPAN), a Wireless Wide Area Network (WWAN), a satellite communication (SATCOM) system, or any other type of wireless communication networks. Each of these types of wireless communication networks supports wireless communications according to one or more communication protocol standards. For example, the cellular network may operate according to the Global System for Mobile Communications (GSM) standard, the Code-Division Multiple Access (CDMA) standard, the Wide-Band Code-Division Multiple Access (WCDM) standard, the Time-Division Multiple Access (TDMA) standard, or any other communication protocol standard, the WLAN may operate according to one or more versions of the IEEE 802.11 standards, the WPAN may operate according to the Infrared Data Association (IrDA), Wireless USB, Bluetooth, or ZigBee standard, and the WWAN may operate according to the Worldwide Interoperability for Microwave Access (WiMAX) standard.

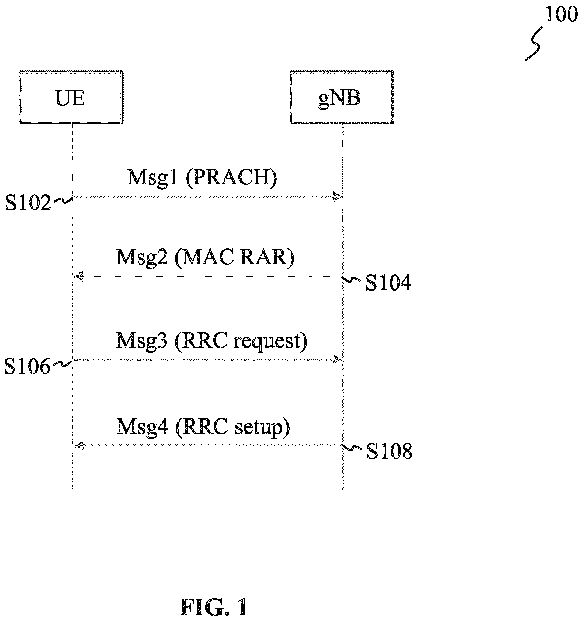

FIG. 1 shows an interaction diagram 100 that explains the interaction between a user device and a gNB in case of the 4-step RACH procedure. The user device is assumed to be any of the above-described UEs. The interaction diagram 100 starts with a step S102, in which the UE transmits a first message, i.e., Msg1, to the gNB. In the Msg1, the UE sends a specific preamble to the gNB via a Physical Random-Access Channel (PRACH) using a specific time-frequency resource also referred to as a RACH occasion (RO). Next, the interaction diagram 100 proceeds to a step S104, in which the gNB transmits a second message, i.e., Msg2, in response to the Msg1. The Msg2 is also referred to as a Random-Access Response (RAR) message, which includes a detected preamble ID, a time-advance command, a Temporary Cell Radio Network Temporary Identifier (TC-RNTI), and an Uplink (UL) grant for the transmission of a next (third) message, i.e., Msg3, on a Physical Uplink Shared Channel (PUSCH). After that, the interaction diagram 100 goes on to a step S106, in which the UE transmits the Msg3 in response to the Msg2. The Msg3 is also referred to as a Radio Resource Control (RRC) request that is sent over the scheduled PUSCH with an ID for contention resolution. The interaction diagram 100 further goes on to a step S108, in which the gNB transmits a fourth message, i.e., Msg4, to the UE in response to the Msg3. The Msg4 is also referred to as an RRC setup that carries a contention resolution message with the contention-resolution ID. Upon reception of the Msg4, the UE sends an acknowledgement (ACK) message on a Physical Uplink Control Channel (PUCCH) if its contention-resolution ID is carried by the Msg4. This completes the 4-step RACH procedure.

It is worth noting that prior to the step S102, there is also a preliminary step of sending and receiving a Synchronization Signal Block (SSB), i.e., Downlink (DL) beam sweeping, which is not formally part of the 4-step (or 2-step) RACH procedure. As a result of this preliminary step, the UE selects an index of a preferred SSB beam and decodes an associated PBCH for a Master Information Block (MIB), a System Information Block (SIB), and so on. This index is also used by UE to identify a suitable RO for the preamble transmission (i.e., the Msg1), according to an SSB-to-RO mapping pattern conveyed by a SIB1. The gNB may use the index of the preferred SSB beam for the Msg2 transmission.

It should be also noted that the 2-step RACH procedure is similar to the 4-step RACH procedure described above with reference to FIG. 1, but the Msg1 and the Msg3 are combined into a MsgA and sent out without waiting for feedback from the UE in between (i.e., the Msg2). Similarly, the gNB combines the Msg2 and the Msg4 into a MsgB.

As for resource allocation for the ROs, it is currently performed as follows. A time-domain resource for the ROs is RRC configured by prach-ConfigurationIndex (in rach-ConfigGeneric), which acts as an indicator to a row of a table specified in TS 38.211 (see clause 6.3.3.2). With the parameters indicated by prach-ConfigurationIndex, the UE determines the preamble format for the PRACH and applies the procedure specified in TS 38.211 (see clause 5.3.2) to find the ROs in the time domain. Parameters msg1-FrequencyStart and msg1-FDM configured in RACH-ConfigGeneric indicate the offset of the lowest RO in the frequency domain and a number of ROs multiplexed in the frequency domain within each set of 6 Orthogonal Frequency Division Multiplexing (OFDM) symbols, respectively. The number of occupied Resource Blocks (RBs) per RO, expressed as a number of RBs for the PUSCH, is specified in clause 6.3.3.2 of TS 38.211, depending on configured sub-carrier spacings for the PRACH and the PUSCH. Parameter ssb-perRACH-OccasionAndCB-PreamblesPerSSB configured in RACH-ConfigCommon indicates two information: (i) a number of SSBs per RO and (ii) a number of contention-based preambles per SSB. The ROs are arranged in the increasing order of frequency resource indices, time resource indices of the ROs within a PRACH slot, and the PRACH slots, sequentially.

In the context of the 4-step RACH procedure, the Msg1 (or, in other words, the PRACH) may be transmitted from the UE to the gNB in a repetitive manner. That is, there may be multiple repetitions of the Msg1 transmitted from the UE to the gNB. However, during the PRACH phase in initial access, the gNB has no idea of UE specific channel conditions, making it difficult for the gNB to be able to assign a precise number of repetitions tailored to a specific UE, compared to repetitions in an RRC connected mode. This was solved in the LTE standard by introducing different coverage enhancements (CE) levels, each assigned to a different number of repetitions. The UE may pick a required CE level based on measured SS-RSRP (i.e., the RSRP of an SS/PBCH block).

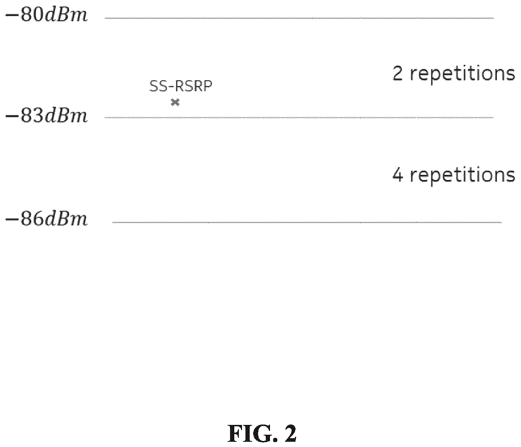

FIG. 2 explains an CE level-based approach which may be used by a user device to select a number of repetitions of the Msg1 in accordance with the LTE standard. The user device is again assumed to be any of the above-described UEs. In FIG. 2, it is assumed that there are two CE levels configured by a gNB for the UE, with one CE level corresponding to 2 repetitions of the Msg1 and another CE level corresponding to 4 repetitions of the Msg1. It is further assumed that the UE has measured an SS-RSRP of -82dBm belonging to one of the CE levels. This means that the UE will transmit the Msg1 or the PRACH with 2 repetitions. Given this, the gNB may select an SS/PBCH block selected by the UE in the Msg1 transmission for the Msg2 transmission. However, such a selection may not always lead to an optimal solution.

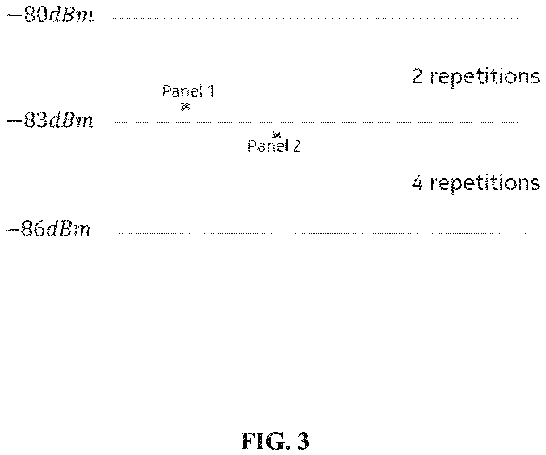

FIG. 3 explains one scenario in which the CE level-based approach of FIG. 2 may lead to a sub-optimal solution. In this scenario, it is assumed that the UE may receive the same SS-RSRP as in FIG. 2 and an additional (similar) SS-RSRP from the same or different SS/PBCH block (e.g., in Frequency Range 1 (FR1) and Frequency Range 2 (FR2)) on different UE antenna panels 1 and 2 or different beams (in the FR2). According to the current standard procedures, as long as both the SS-RSRP are above a configured threshold, the UE can choose one of those by UE implementation, and if the UE chooses randomly among those, this may lead to a sub-optimal choice.

Such a selection may indeed yield a scenario in which the selected SS/PBCH block is not the best one in terms of the measured SS-RSRP. This may also lead to misalignment between what would be the best beam according to gNB's understanding, i.e., the beam corresponding to the RO chosen by the UE for transmitting the Msg1, and the actual best beam, i.e., the beam for which the highest SS-RSRP is measured by the UE. For example, assuming that one or more of the two UE antenna panels receive different SS/PBCH blocks, if the UE selects a SS/PBCH block associated with a lower SS-RSRP, the same SS/PBCH block may be used by the gNB for the Msg2 transmission in a DL. In this case, the SS/PBCH block used by the gNB for the Msg2 transmission may not be the best SS/PBCH block in terms of the SS-RSRP. It is worth noting that such a problem could be encountered also in the FR1, where two SS/PBCH blocks are received with different but similar power from a UE antenna.

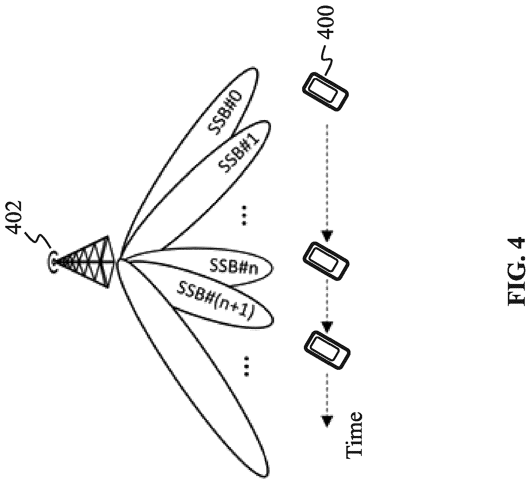

FIG. 4 explains another scenario in which the CE level-based approach of FIG. 2 may lead to a sub-optimal solution. This scenario relates to a moving UE (e.g., mobile phone) 400 with repetitions for the Msg1. It is assumed that a gNB 402 broadcasts a set of SSBs, and the UE 400 may have some prior knowledge about a time difference between two consecutive SSBs based on its moving speed and its sensing of an SSB burst. In this case, the UE 400 may infer that the movement will bring it in a position where a different SSB may yield the highest SS-RSRP value. This becomes more relevant when the repetitions of the Msg1 are implied.

Indeed, since the UE 400 transmits the Msg1 with multiple repetitions, this transmission may take the whole duration of one SSB (e.g., all repetitions of the Msg1 may be associated with SSB#n in FIG. 4). This may result in the fact that a suitable SSB for the Msg2 transmission may be another SSB, e.g., SSB#(n+1), instead of the one used for the Msg1 transmission. Thanks to the prior knowledge about the time difference between the two consecutive SSBs and the duration of each repetition of the Msg1, the UE 400 may know in advance the best SSB for the Msg2, e.g., SSB#(n+1) or SSB#(n+2). However, there is currently no reporting framework that would allow the UE 400 to transmit information about the best SSB for the Msg2 to the gNB 402.

The example embodiments disclosed herein provide a technical solution that allows mitigating or even eliminating the above-sounded drawbacks peculiar to the prior art. In particular, the technical solution allows one to overcome the issues inherent in the scenarios of FIGs. 3 and 4 by signaling information indicative of a preferred SSB for the Msg2 from a user device to a network node via the Msg1. More specifically, the user device may implicitly signal the preferred SSB for the Msg2 by properly selecting one of predefined repetition patterns for the Msg1. Each of the predefined repetition patterns is configured to cause the user device to transmit the Msg1 in a different repetitive manner and is associated with one of predefined metrics. In turn, each of the predefined metrics is associated with one of predefined SSBs or beams for the Msg2. Therefore, after the network node receives the repetitions of the Msg1 from the user device, the network node may determine which of the repetition patterns has been used by the user device and, consequently, determine the preferred SSB or beam or the scheduling parameters for the Msg2 via the corresponding metric associated with the repetition pattern used by the user device.

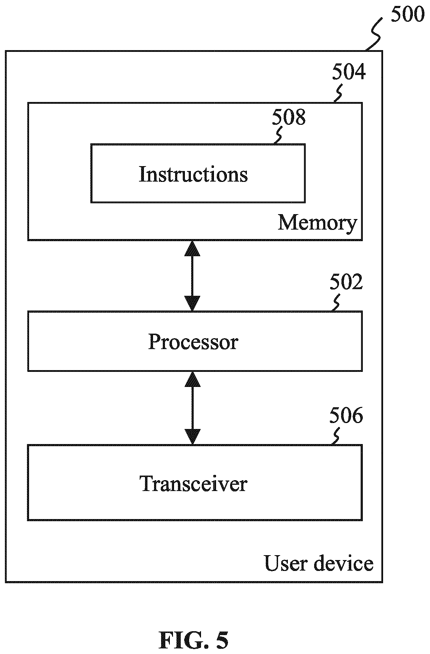

FIG. 5 shows a block diagram of a user device 500 in accordance with one example embodiment. The user device 500 is intended to communicate with one or more network nodes (e.g., gNBs) in any of the above-described wireless communication networks. The user device 500 may be implemented as any of the above-described UEs. As shown in FIG. 5, the user device 500 comprises a processor 502, a memory 504, and a transceiver 506. The memory 504 stores processor-executable instructions 508 which, when executed by the processor 502, cause the processor 502 to perform the aspects of the present disclosure, as will be described below in more detail. It should be noted that the number, arrangement, and interconnection of the constructive elements constituting the user device 500, which are shown in FIG. 5, are not intended to be any limitation of the present disclosure, but merely used to provide a general idea of how the constructive elements may be implemented within the user device 500. For example, the processor 502 may be replaced with several processors, as well as the memory 504 may be replaced with several removable and/or fixed storage devices, depending on particular applications. Furthermore, in some embodiments, the transceiver 506 may be implemented as two individual devices, with one for a receiving operation and another for a transmitting operation. Irrespective of its implementation, the transceiver 506 is intended to be capable of performing different operations required to perform the data reception and transmission, such, for example, as signal modulation/demodulation, encoding/decoding, etc. In other embodiments, the transceiver 506 may be part of the processor 502 itself.

The processor 502 may be implemented as a CPU, general-purpose processor, single-purpose processor, microcontroller, microprocessor, application specific integrated circuit (ASIC), field programmable gate array (FPGA), digital signal processor (DSP), complex programmable logic device, etc. It should be also noted that the processor 502 may be implemented as any combination of one or more of the aforesaid. As an example, the processor 502 may be a combination of two or more microprocessors.

The memory 504 may be implemented as a classical nonvolatile or volatile memory used in the modern electronic computing machines. As an example, the nonvolatile memory may include Read-Only Memory (ROM), ferroelectric Random-Access Memory (RAM), Programmable ROM (PROM), Electrically Erasable PROM (EEPROM), solid state drive (SSD), flash memory, magnetic disk storage (such as hard drives and magnetic tapes), optical disc storage (such as CD, DVD and Blu-ray discs), etc. As for the volatile memory, examples thereof include Dynamic RAM, Synchronous DRAM (SDRAM), Double Data Rate SDRAM (DDR SDRAM), Static RAM, etc.

The processor-executable instructions 508 stored in the memory 504 may be configured as a computer-executable program code which causes the processor 502 to perform the aspects of the present disclosure. The computer-executable program code for carrying out operations or steps for the aspects of the present disclosure may be written in any combination of one or more programming languages, such as Java, C++, or the like. In some examples, the computer-executable program code may be in the form of a high-level language or in a pre-compiled form and be generated by an interpreter (also pre-stored in the memory 504) on the fly.

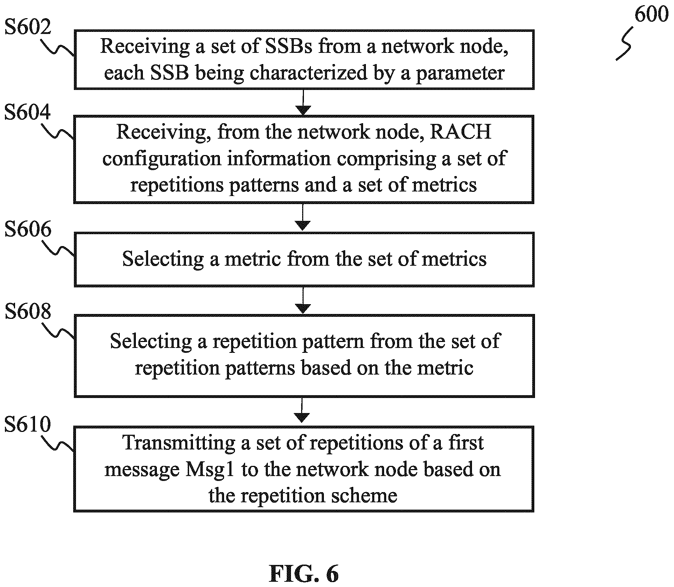

FIG. 6 shows a flowchart of a method 600 for operating the user device 500 in accordance with one example embodiment. The method 600 starts with a step S602, in which the processor 502 receives a set of SSBs from the network node. Each SSB of the set of SSBs is characterized by a parameter. Then, the method 600 proceeds to a step S604, in which the processor 502 receives (e.g., in a SIB1 message) RACH configuration information from the network node. The RACH configuration information may relate to any of the 4-step RACH procedure and the 2-step RACH procedure. Although the embodiments described herein are related to the Msg1 and the Msg2 (i.e., the 4-step RACH procedure), they may be equally used in respect of the MsgA and the MsgB (i.e., the 2-step RACH procedure), since the Msg1 is part of the MsgA and the Msg2 is part of the MsgB. As noted earlier, the Msg2 is to be transmitted from the network node to the UE 500 in response to the Msg1. The RACH configuration information is generated by the network node such that it comprises a set of repetitions patterns and a set of metrics. Each repetition pattern of the set of repetition patterns is configured to cause the user device 500 to transmit a set of repetitions of the Msg1 to the network node. Each metric of the set of metrics is associated with one repetition pattern of the set of repetitions patterns and represents: (i) a difference between two values of the parameter for one SSB of the set of SSBs (e.g., the two different values of the parameter for the same SSB may be obtained when the user device 500 receives the SSB on different antenna panels or with different beams from the network node); or (ii) a difference between the value of the parameter for one SSB of the set of SSBs and the value of the parameter for another SSB of the set of SSBs. Further, the method 600 proceeds to a step S606, in which the processor 502 selects a metric from the set of metrics based on the difference (i) or (ii). As an example, the user device 500 may perform proper measurements or prediction of the preferred SSB based on its speed and/or communication quality (e.g., channel conditions) and, consequently, select the target metric corresponding to the preferred SSB (i.e., that metric in which the preferred SSB is used). As another example, the RACH configuration information may additionally indicate a range of values for the difference (i) or (ii), i.e., the network node may provide the UE 500 with the difference (i) or (ii) and the range of values which it should fit, and the user device 500 may check whether the actual difference (i) or (ii) falls within the range of values (in this way, the user device 500 may select the proper metric). Next, the method goes on to a step S608, in which the processor 502 selects a repetition pattern from the set of repetition patterns based on the metric selected in the step S606. In other words, the processor 502 selects the preferred SSB for the Msg2 or recommends scheduling parameters for the preferred SSB for the Msg2 from the set of SSBs in the step S608. After that, the method 600 goes on to a step S610, in which the processor 502 transmits the set of repetitions of the Msg1 to the network node based on the repetition pattern selected in the step S608.

In one embodiment, the parameter of each SSB of the set of SSBs may comprise, but not limited to, an SSB index, a Reference Signal Received Powers (RSRP), a Received Signal Strength Indicator (RSSI) and a Reference Signal Received Quality (RSRQ). In this case, each metric of the set of metrics may, for example, relate to the difference between the SSB indices of two SSBs (hereinafter referred to as delta_SSBindex), and/or the difference between the RSRPs of one or two SSBs (hereinafter referred to as delta_RSRP). By determining the repetition pattern used by the user device 500 to transmit the repetitions of the Msg1, the network node may find the associated metric first and then determine the parameters associated with the preferred SSB for the Msg2 from the metric. The parameters delta_SSBindex and/or delta_RSRP may be broadcasted by the network node or standardized under the form of a table with different row indices. Table 1 below gives one example.

**Table 1. An example of the table broadcasted by the network node to the user device 500 or standardized.**

| Row # | delta_SSBindex | delta_RSRP [dB] |
|---|---|---|
| 1 | 1 | From 0 to 1 |
| 2 | 1 | From 1 to 2 |
| 3 | -1 | From 0 to 1 |
| 4 | -1 | From 1 to 2 |
| 5 | 2 | From 0 to 1 |
| 6 | -2 | From 1 to 2 |

In one embodiment, each repetition pattern of the set of repetition patterns may be configured to cause the user device 500 to transmit each next repetition of the Msg1 by using a preamble for a previous repetition of the Msg1 but shifted by a cyclic shift (hereinafter referred to as delta_CS). The parameter delta_CS is different for each repetition pattern of the set of repetition patterns. The RACH configuration information may, for example, comprise the association between the parameter delta_CS across the preambles used for the Msg1 repetitions and the corresponding parameters delta_SSBindex and/or delta_RSRP. Again, this association may be transmitted in a tabular form.

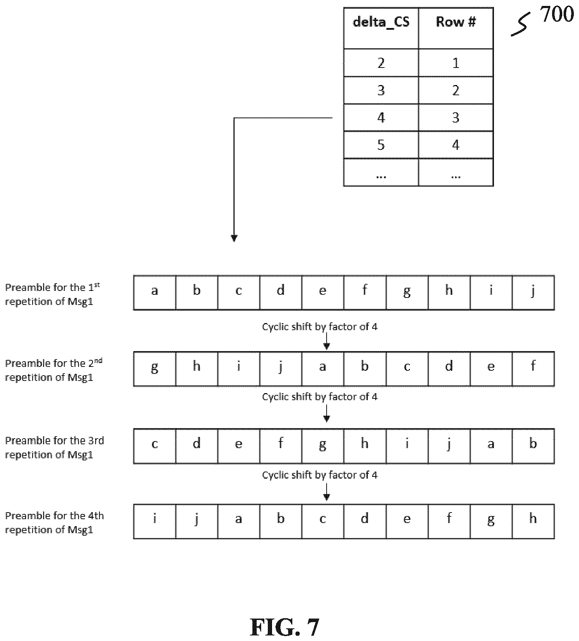

FIG. 7 shows one example of how to apply the cyclic shift delta_CS to a preamble for each Msg1 repetition to implicitly signal the preferred SSB for the Msg 2 from the user device 500 to the network node. It is assumed that the network node may broadcast a table 700. Each row of the table 700 is associated with a different cyclic shift delta_CS. By matching the rows of the table 700 to the rows of Table 1 above, it is possible to find the association between each cyclic shift delta_CS and at least one of the parameters delta_SSBindex and delta_RSRP (or, in other words, between each cyclic shift delta_CS and one SSB of the set of SSBs available for the Msg2). The parameter delta_CS is used for cyclically shifting the preambles across the Msg1 repetitions. The table 700 may be also implemented as part of Table 1 above, if required and depending on particular applications. In FIG. 7, 4 repetitions of the Msg1 are implied, and the third row of the table 700 is selected (i.e., delta_CS = 4 for each preamble).

In an alternative embodiment, each repetition pattern of the set of repetition patterns may be characterized by a different sequence of cyclic shifts delta_CS. In this embodiment, each repetition pattern of the set of repetition patterns may be configured to cause the user device 500 to transmit each next repetition of the Msg1 by using a preamble for a previous repetition of the Msg1 but shifted each time by a different cyclic shift delta_CS of the sequence of cyclic shifts delta_CS. This means that the user device 500 is caused to use a new cyclic shift delta_CS whenever a new repetition of the Msg1 is to be transmitted to the network node. The user device 500 may apply the cyclic shifts delta_CS sequentially, i.e., one by one, to the preambles for the next repetitions of the Msg1. If the number of the repetitions of the Msg1 is more than the sequence size, the user device 500 may read the sequence of cyclic shifts delta_CS in a cyclic fashion.

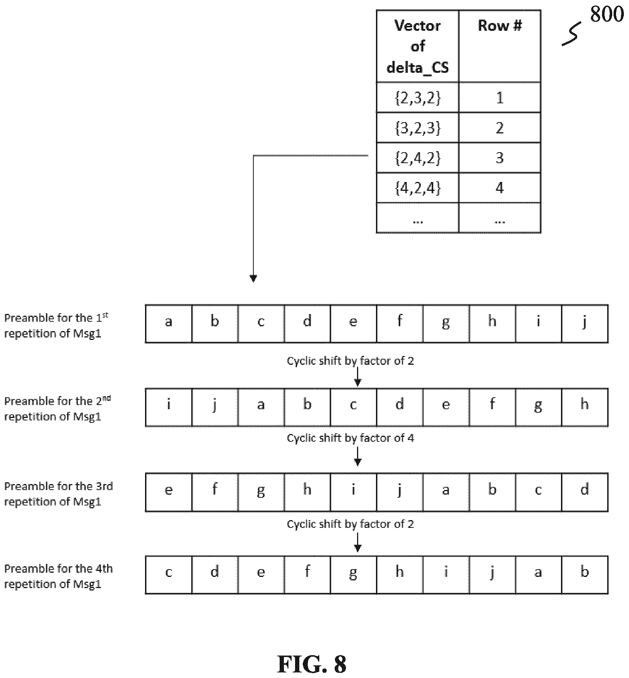

FIG. 8 shows one example of how to apply the sequence of cyclic shifts delta_CS to the preamble for each Msg1 repetition to implicitly signal the preferred SSB for the Msg 2 from the user device 500 to the network node. It is assumed that the network node broadcasts a table 800 like Table 1 above. Each row of the table 800 is associated with a different sequence of cyclic shifts delta_CS, which is used for cyclically shifting the preambles across the Msg1 repetitions. Each delta_CS value in the sequence corresponds to the cyclic shift to be applied for the preamble from one Msg1 repetition to another. In FIG. 8, 4 repetitions of the Msg1 are implied, and the third row of the table 800 is selected. This means that the preamble for the second repetition of the Msg1 corresponds to the preamble for the first repetition of the Msg1 but cyclically shifted by 2, the preamble for the third repetition of the Msg1 corresponds to the preamble for the second repetition of the Msg1 but cyclically shifted by 4, and the preamble for the fourth repetition of the Msg1 corresponds to the preamble for the third repetition of the Msg1 but cyclically shifted by 2.

It should be noted that each of the tables 700 and 800 may be standardized and the network node may only broadcast the required association between the rows of the table 700 and the cyclic shift delta_CS or between the rows of the table 800 and the sequence of cyclic shifts delta_CS.

In an alternative or additional embodiment, each repetition pattern of the set of repetition patterns may be configured to cause the user device 500 to transmit the repetitions of the Msg1 by using a different or same sequence of ROs. In other words, there may be an association between a specific RO pattern for the transmission of the repetitions of the Msg1 and the corresponding delta_SSBindex and/or delta_RSRP.

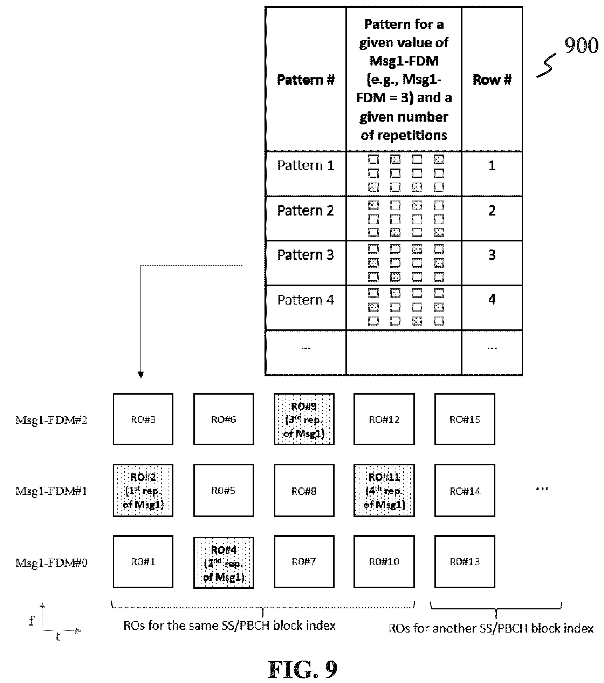

FIG. 9 shows one example of how to apply a certain RO pattern to the preamble for each Msg1 repetition to implicitly signal the preferred SSB for the Msg 2 from the user device 500 to the network node. It is assumed that the network node broadcasts a table 900 like Table 1 above. Each row of the table 900 is associated with a specific set of ROs/RO pattern for the transmission of the repetitions of the Msg1. In FIG. 9, 4 repetitions of the Msg1 are implied, pattern 3 is selected (with the parameter Msg1-FDM = 3), and all Msg1 repetitions are associated with the same SSB index. Each RO used for a certain repetition of the Msg1 is shown in FIG. 9 by using a dotted pattern fill.

It should be again noted that the table 900 may be standardized and the network node may only broadcast the required association between the rows of the table 900 and the specific RO patterns.

In one other embodiment, the network node may further broadcast (on top of the table 700/800 and the table 900) a set of preambles. A row selection is considered as valid only when a preamble from the set of preambles is used for the repetitions of the Msg1 and the corresponding specific RO pattern is used.

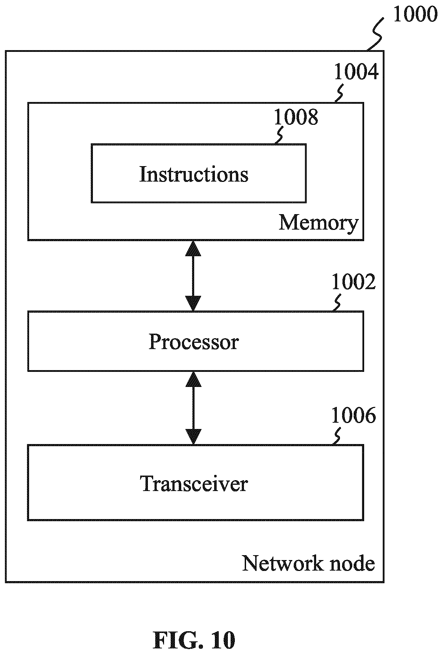

FIG. 10 shows a block diagram of a network node 1000 in accordance with one example embodiment. The network node 1000 is intended to communicate with the user device 500 in any of the above-described wireless communication networks. As shown in FIG. 10, the network node 1000 comprises a processor 1002, a memory 1004, and a transceiver 1006. The memory 1004 stores processor-executable instructions 1008 which, when executed by the processor 1002, cause the processor 1002 to implement the aspects of the present disclosure, as will be described below in more detail. It should be again noted that the number, arrangement, and interconnection of the constructive elements constituting the network node 1000, which are shown in FIG. 10, are not intended to be any limitation of the present disclosure, but merely used to provide a general idea of how the constructive elements may be implemented within the network node 1000. In general, the processor 1002, the memory 1004, the transceiver 1006, and the processor-executable instructions 1008 may be implemented in the same or similar manner as the processor 502, the memory 504, the transceiver 506, and the processor-executable instructions 508, respectively.

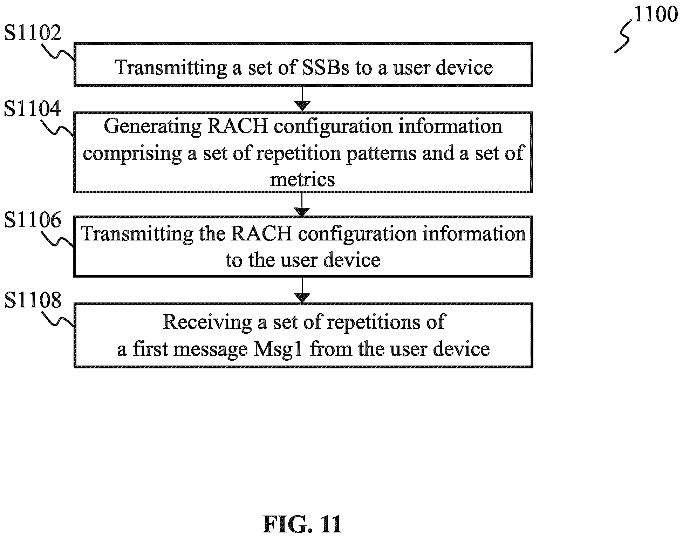

FIG. 11 shows a flowchart of a method 1100 for operating the network node 1000 in accordance with one example embodiment. The method 1100 starts with a step S1102, in which the processor 1002 transmits the set of SSBs to the user device 500 (i.e., the processor 502). Then, the method 1100 proceeds to a step S1104, in which the processor 1002 generates the RACH configuration information for the user device 500. The RACH configuration information may relate to any of the 4-step RACH procedure and the 2-step RACH procedure. The RACH configuration information may comprise any of the above-described data relating to the set of repetition patterns and the set of metrics. For example, the RACH configuration information may comprise the tables 700 or 800, and/or the table 900, each of which defines a certain type of repetition patterns to be used by the user device 500 to transmit the Msg1 in a repetitive manner. Each metric of the set of metrics may relate to the difference between the SSB indices of two SSBs of the set of SSBs, and/or the difference between the RSRPs of two SSBs of the set of SSBs. Further, the method 1100 proceeds to a step S1106, in which the processor 1002 transmits (e.g., in a SIB 1 message) the RACH configuration information to the user device 500 (i.e., the processor 502). Next, the method 1100 goes on to a step S1108, in which the processor 1002 receives the set of repetitions of the Msg1 from the user device 500 (i.e., the processor 502).

Upon receiving the set of repetitions of the Msg1 from the user device 500, the network node 1000 may decide whether and how to schedule the remaining messages in the RACH procedure. For example, the following non-restrictive processing of the set of repetitions of the Msg1 is possible. the processor 1002 finds, in the set of repetition patterns, the repetition pattern by which the set of repetitions of the Msg1 has been transmitted from the user device 500 to the network node 1000. After that, the processor 1002 finds, in the set of metrics, the metric that is associated with the repetition pattern used by the user device 500. Subsequently, the processor 1002 uses the metric to determine the preferred SSB for the Msg2 among the set of SSBs.

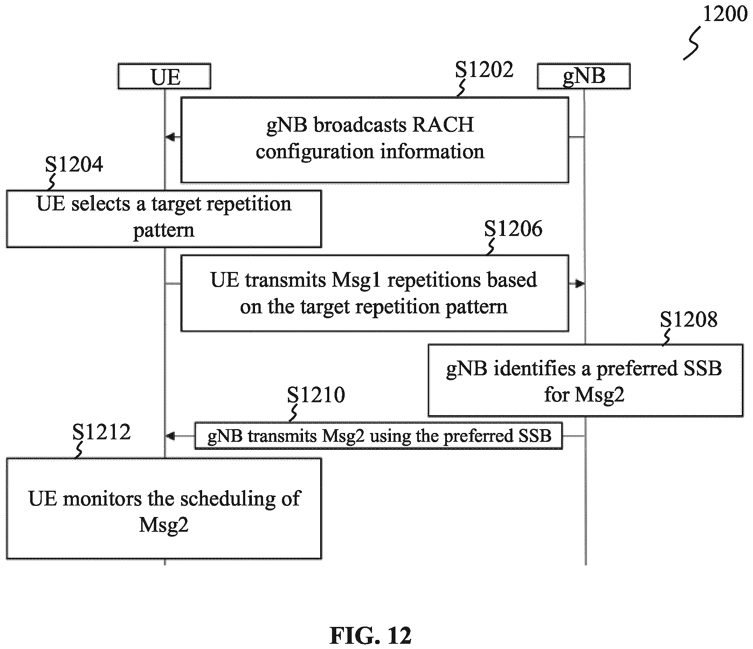

FIG. 12 shows an interaction diagram 1200 that explains the interaction between a user device and a gNB in case of the RACH procedure in accordance with one exemplary embodiment. In the interaction diagram 1200, it is assumed that the user device is a UE that is implemented as the user device 500, and the gNB is implemented as the network node 1000. The interaction diagram 1200 starts with a step S1202, in which the gNB broadcasts the RACH configuration information to the UE. The RACH configuration information is assumed to comprise to at least one of:
- the association between the cyclic shift delta_CS or the sequence of delta_CS values which is/are to be applied by the UE across the preambles for Msg1 repetitions and the corresponding delta_SSBindex and/or delta_RSRP;
- the association between the RO pattern for the Msg1 repetitions and the corresponding delta_SSBindex and/or delta_RSRP; and
- a specific sequence of preambles for the Msg1 repetitions.

Then, the interaction diagram proceeds to a step S1204, in which the UE selects a target repetition pattern for the Msg1. More specifically, the UE selects the cyclic shift delta_CS or the sequence of delta_CS values and/or the RO pattern. The UE additionally selects a preamble of the set of preambles associated with the parameter delta_SSBindex and/or the parameter delta_RSRP that the UE would like to convey, or a random preamble.

Next, the interaction diagram 1200 goes on to a step S1206, in which the UE transmits the Msg1 repetitions to the gNB based on the target repetition pattern. More specifically, the UE determines the preamble for the (n+1)-th Msg1 repetition by applying the selected cyclic shift delta_CS or the corresponding delta_CS value (of the sequence of delta_CS values) to the preamble for the n-th Msg1 repetition. Further, the UE indicates the preferred SSB for Msg2 transmission by: transmitting the determined preambles on a random RO pattern for the Msg1 repetitions, or transmitting the determined preambles on the selected RO pattern for the Msg1 repetitions, or transmitting the selected preamble on the selected RO pattern for the Msg1 repetitions.

After that, a next step S1208 is initiated, in which the gNB identifies the preferred SSB based on the delta_SSBindex and/or delta_RSRP by detecting the cyclic shift across the preambles for the Msg1 and/or by the specific RO pattern.

Further, the interaction diagram 1200 goes on to a step S1210, in which the gNB transmits the Msg2 using the identified preferred SSB.

The interaction diagram 1200 ends up with a step S1212, in which the UE monitors the scheduling of Msg2 on: (a) the beam corresponding to the indicated preferred SSB for the Msg2 transmission, or (b) both the beam corresponding to the SSB used for the Msg1 transmission and the beam corresponding to the indicated preferred SSB for the Msg2 transmission.

It should be noted that each step or operation of the methods 600 and 1100, and the interaction diagram 1200, or any combinations of the steps or operations, can be implemented by various means, such as hardware, firmware, and/or software. As an example, one or more of the steps or operations described above can be embodied by processor executable instructions, data structures, program modules, and other suitable data representations. Furthermore, the processor-executable instructions which embody the steps or operations described above can be stored on a corresponding data carrier and executed by the processor 502 or 1002, respectively. This data carrier can be implemented as any computer-readable storage medium configured to be readable by said at least one processor to execute the processor executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

Although the example embodiments of the present disclosure are described herein, it should be noted that any various changes and modifications could be made in the embodiments of the present disclosure, without departing from the scope of legal protection which is defined by the appended claims. In the appended claims, the word "comprising" does not exclude other elements or operations, and the indefinite article "a" or "an" does not exclude a plurality. The scope of the invention is solely defined by the appended claims.

## Claims

1. A user device comprising:
at least one processor; and
at least one memory including a computer program code;
wherein the at least one memory and the computer program code are configured to,
with the at least one processor, cause the user device at least to:
receive a set of synchronization signal blocks (SSBs) from a network node, each SSB of the set of SSBs being **characterized by** a parameter;
receive Random Access Channel (RACH) configuration information from the network node, the RACH configuration information comprising a set of repetition patterns and a set of metrics, each repetition pattern of the set of repetition patterns being configured to cause the user device to transmit a set of repetitions of a message 1 (Msg1) to the network node, each metric of the set of metrics being associated with one repetition pattern of the set of repetition patterns and representing:
(i) a difference between two values of the parameter for one SSB of the set of SSBs; or
(ii) a difference between the value of the parameter for one SSB of the set of SSBs and the value of the parameter for another SSB of the set of SSBs;
select a metric from the set of metrics based on the difference (i) or (ii);
select a repetition pattern from the set of repetition patterns based on the metric; and
transmit the set of repetitions of the Msg1 to the network node based on the repetition pattern.

2. The user device of claim 1, wherein each repetition pattern of the set of repetition patterns is configured to cause the user device to transmit each next repetition of the set of repetitions of the Msg1 by using a preamble for a previous repetition of the set of repetitions of the Msg1 but shifted by a cyclic shift, the cyclic shift being different for each repetition pattern of the set of repetition patterns.

3. The user device of claim 1, wherein each repetition pattern of the set of repetition patterns is **characterized by** a different sequence of cyclic shifts, and wherein each repetition pattern of the set of repetition patterns is configured to cause the user device to transmit each next repetition of the set of repetitions of the Msg1 by using a preamble for a previous repetition of the set of repetitions of the Msg1 but shifted each time by a different cyclic shift of the sequence of cyclic shifts.

4. The user device of claim 3, wherein the sequence of cyclic shifts has a sequence size, and wherein, if a number of repetitions in the set of repetitions of the Msg1 is larger than the sequence size, each repetition pattern of the set of repetition patterns is further configured to cause the user device to read the sequence of cyclic shifts in a cyclic fashion.

5. The user device of claim 1, wherein each repetition pattern of the set of repetition patterns is **characterized by** a different sequence of preambles, and wherein each repetition pattern of the set of repetition patterns is configured to cause the user device to transmit the set of repetitions of the Msg1 by using at least one preamble from the sequence of preambles.

6. The user device of claim 5, wherein each repetition pattern of the set of repetition patterns causes the user device to transmit each repetition of the set of repetitions of the Msg1 by using a different preamble from the sequence of preambles, wherein the sequence of preambles has a sequence size, and wherein, if a number of repetitions in the set of repetitions of the Msg1 is larger than the sequence size, each repetition pattern of the set of repetition patterns is further configured to cause the user device to read the sequence of preambles in a cyclic fashion.

7. The user device of claims 1, wherein each repetition pattern of the set of repetition patterns is configured to cause the user device to transmit the set of repetitions of the Msg1 by using a different sequence of RACH occasions (ROs).

8. The user device of any one of claims 2 to 6, wherein each repetition pattern of the set of repetition patterns is configured to cause the user device to transmit the set of repetitions of the Msg1 by using a different or same sequence of ROs.

9. The user device of any one of claims 1 to 8, wherein the RACH configuration information is presented as a table comprising multiple rows each indicating an association between one repetition pattern of the set of repetition patterns and one metric of the set of metrics.

10. The user device of any one of claims 1 to 9, wherein the parameter comprises at least one of an SSB index, a Reference Signal Received Power (RSRP), a Received Signal Strength Indicator (RSSI) and a Reference Signal Received Quality (RSRQ).

11. The user device of any one of claims 1 to 10, wherein the RACH procedure is one of a 4-step RACH procedure and a 2-step RACH procedure.

12. A network node comprising:
at least one processor; and
at least one memory including a computer program code;
wherein the at least one memory and the computer program code are configured to,
with the at least one processor, cause the network node at least to:
transmit a set of synchronization signal blocks (SSBs) to a user device, each SSB of the set of SSBs being **characterized by** a parameter;
generate Random Access Channel (RACH) configuration information comprising a set of repetition patterns and a set of metrics, each repetition pattern of the set of repetition patterns being configured to cause the user device to transmit a set of repetitions of a message 1 (Msg1) to the network node, each metric of the set of metrics being associated with one repetition pattern of the set of repetition patterns and representing:
(i) a difference between two values of the parameter for one SSB of the set of SSBs; or
(ii) a difference between the value of the parameter for one SSB of the set of SSBs and the value of the parameter for another SSB of the set of SSBs;
transmit the RACH configuration information to the user device; and
receive the set of repetitions of the Msg1 from the user device.

13. A method for operating a user device, comprising:
receiving a set of synchronization signal blocks (SSBs) from a network node, each SSB of the set of SSBs being **characterized by** a parameter;
receiving Random Access Channel (RACH) configuration information from the network node, the RACH configuration information comprising a set of repetition patterns and a set of metrics, each repetition pattern of the set of repetition patterns being configured to cause the user device to transmit a set of repetitions of a message 1 (Msg1) to the network node, each metric of the set of metrics being associated with one repetition pattern of the set of repetition patterns and representing:
(i) a difference between two values of the parameter for one SSB of the set of SSBs; or
(ii) a difference between the value of the parameter for one SSB of the set of SSBs and the value of the parameter for another SSB of the set of SSBs;
selecting a metric from the set of metrics based on the difference (i) or (ii);
selecting a repetition pattern from the set of repetition patterns based on the metric; and
transmitting the set of repetitions of the Msg1 to the network node based on the repetition pattern.

14. A method for operating a network node, comprising:
transmitting a set of synchronization signal blocks (SSBs) to a user device, each SSB of the set of SSBs being **characterized by** a parameter;
generating Random Access Channel (RACH) configuration information comprising a set of repetition patterns and a set of metrics, each repetition pattern of the set of repetition patterns being configured to cause the user device to transmit a set of repetitions of a message 1 (Msg1) to the network node, each metric of the set of metrics being associated with one repetition pattern of the set of repetition patterns and representing:
(i) a difference between two values of the parameter for one SSB of the set of SSBs; or
(ii) a difference between the value of the parameter for one SSB of the set of SSBs and the value of the parameter for another SSB of the set of SSBs;
transmitting the RACH configuration information to the user device; and
receiving the set of repetitions of the Msg1 from the user device.

15. A computer program product comprising a computer-readable storage medium, wherein the computer-readable storage medium stores a computer code which, when executed by at least one processor, causes the at least one processor to perform the method according to claim 13.

## Patentansprüche

1. Benutzervorrichtung die Folgendes umfasst:
mindestens einen Prozessor; und
mindestens einen Speicher, der einen Computerprogrammcode beinhaltet;
wobei der mindestens eine Speicher und der Computerprogrammcode dazu ausgelegt sind, die Benutzervorrichtung mit dem mindestens einen Prozessor mindestens zu Folgendem zu veranlassen:
Empfangen eines Satzes von Synchronisationssignalblöcken (SSBs) von einem Netzwerkknoten, wobei jeder SSB des Satzes von SSBs durch einen Parameter gekennzeichnet ist;
Empfangen von Direktzugriffskanal(RACH)-Auslegungsinformationen vom Netzwerkknoten, wobei die RACH-Auslegungsinformationen einen Satz von Wiederholungsmustern und einen Satz von Metriken umfassen, wobei jedes Wiederholungsmuster des Satzes von Wiederholungsmustern dazu ausgelegt ist, die Benutzervorrichtung zu veranlassen, einen Satz von Wiederholungen einer Nachricht 1 (Msg1) zum Netzwerkknoten zu übertragen, wobei jede Metrik des Satzes von Metriken mit einem Wiederholungsmuster des Satzes von Wiederholungsmustern verknüpft ist und Folgendes repräsentiert:
(i) eine Differenz zwischen zwei Werten des Parameters für einen SSB des Satzes von SSBs; oder
(ii) eine Differenz zwischen dem Wert des Parameters für einen SSB des Satzes von SSBs und dem Wert des Parameters für einen weiteren SSB des Satzes von SSBs;
Auswählen einer Metrik aus dem Satz von Metriken auf Basis der Differenz (i) oder (ii);
Auswählen eines Wiederholungsmusters aus dem Satz von Wiederholungsmustern auf Basis der Metrik; und
Übertragen des Satzes von Wiederholungen der Msg1 zum Netzwerkknoten auf Basis des Wiederholungsmusters.

2. Benutzervorrichtung nach Anspruch 1, wobei jedes Wiederholungsmuster des Satzes von Wiederholungsmustern dazu ausgelegt ist, die Benutzervorrichtung zu veranlassen, jede nächste Wiederholung des Satzes von Wiederholungen der Msg1 durch Verwenden einer Präambel einer vorherigen Wiederholung des Satzes von Wiederholungen der Msg1, die aber durch eine zyklische Verschiebung verschoben ist, zu übertragen, wobei sich die zyklische Verschiebung für jedes Wiederholungsmuster des Satzes von Wiederholungsmustern unterscheidet.

3. Benutzervorrichtung nach Anspruch 1, wobei jedes Wiederholungsmuster des Satzes von Wiederholungsmustern durch eine unterschiedliche Sequenz von zyklischen Verschiebungen gekennzeichnet ist, und wobei jedes Wiederholungsmuster des Satzes von Wiederholungsmustern dazu ausgelegt ist, die Benutzervorrichtung zu veranlassen, jede nächste Wiederholung des Satzes von Wiederholungen der Msg1 unter Verwendung einer Präambel für eine vorherige Wiederholung des Satzes von Wiederholungen der Msg1, die aber jedes Mal durch eine unterschiedliche zyklische Verschiebung der Sequenz von zyklischen Verschiebungen verschoben ist, zu übertragen.

4. Benutzervorrichtung nach Anspruch **3,** wobei die Sequenz von zyklischen Verschiebungen eine Sequenzgröße aufweist und wobei, wenn eine Anzahl von Wiederholungen im Satz von Wiederholungen der Msg1 größer ist als die Sequenzgröße, jedes Wiederholungsmuster des Satzes von Wiederholungsmustern ferner dazu ausgelegt ist, die Benutzervorrichtung zu veranlassen, die Sequenz von zyklischen Verschiebungen in einer Zyklusweise zu lesen.

5. Benutzervorrichtung nach Anspruch 1, wobei jedes Wiederholungsmuster des Satzes von Wiederholungsmustern durch eine unterschiedliche Sequenz von Präambeln gekennzeichnet ist, und wobei jedes Wiederholungsmuster des Satzes von Wiederholungsmustern dazu ausgelegt ist, die Benutzervorrichtung zu veranlassen, den Satz von Wiederholungen der Msg1 unter Verwendung von mindestens einer Präambel aus der Sequenz von Präambeln zu übertragen.

6. Benutzervorrichtung nach Anspruch 5, wobei jedes Wiederholungsmuster des Satzes von Wiederholungsmustern die Benutzervorrichtung veranlasst, jede Wiederholung des Satzes von Wiederholungen der Msg1 unter Verwendung einer unterschiedlichen Präambel aus der Sequenz von Präambeln zu übertragen, wobei die Sequenz von Präambeln eine Sequenzgröße aufweist und wobei, wenn eine Anzahl von Wiederholungen im Satz von Wiederholungen der Msg1 größer ist als die Sequenzgröße, jedes Wiederholungsmuster des Satzes von Wiederholungsmustern ferner dazu ausgelegt ist, die Benutzervorrichtung zu veranlassen, die Sequenz von Präambeln in einer Zyklusweise zu lesen.

7. Benutzervorrichtung nach Anspruch 1, wobei jedes Wiederholungsmuster des Satzes von Wiederholungsmustern dazu ausgelegt ist, die Benutzervorrichtung zu veranlassen, den Satz von Wiederholungen der Msg1 unter Verwendung einer unterschiedlichen Sequenz von RACH-Gelegenheiten (ROs) zu übertragen.

8. Benutzervorrichtung nach einem der Ansprüche 2 bis **6,** wobei jedes Wiederholungsmuster des Satzes von Wiederholungsmustern dazu ausgelegt ist, die Benutzervorrichtung zu veranlassen, den Satz von Wiederholungen der Msg1 unter Verwendung einer unterschiedlichen oder einer selben Sequenz von ROs zu übertragen.

9. Benutzervorrichtung nach einem der Ansprüche 1 bis 8, wobei die RACH-Auslegungsinformationen als eine Tabelle präsentiert werden, die mehrere Zeilen umfasst, wobei jede eine Verknüpfung zwischen einem Wiederholungsmuster des Satzes von Wiederholungsmustern und einer Metrik des Satzes von Metriken anzeigt.

10. Benutzervorrichtung nach einem der Ansprüche 1 bis 9, wobei der Parameter mindestens eines von einem SSB-Index, einer Referenzsignalempfangsleistung (RSRP), einer Empfangssignalstärkeanzeige (RSSI) und einer Referenzsignalempfangsqualität (RSRQ) umfasst.

11. Benutzervorrichtung nach einem der Ansprüche 1 bis 10, wobei die RACH-Prozedur eine von einer 4-stufigen RACH-Prozedur und einer 2-stufigen RACH-Prozedur ist.

12. Netzwerkknoten, der Folgendes umfasst:
mindestens einen Prozessor; und
mindestens einen Speicher, der einen Computerprogrammcode beinhaltet;
wobei der mindestens eine Speicher und der Computerprogrammcode dazu ausgelegt sind, den Netzwerkknoten mit dem mindestens einen Prozessor mindestens zu Folgendem zu veranlassen:
Übertragen eines Satzes von Synchronisationssignalblöcken (SSBs) zu einer Benutzervorrichtung, wobei jeder SSB des Satzes von SSBs durch einen Parameter gekennzeichnet ist;
Erzeugen von Direktzugriffskanal(RACH)-Auslegungsinformationen, die einen Satz von Wiederholungsmustern und einen Satz von Metriken umfassen, wobei jedes Wiederholungsmuster des Satzes von Wiederholungsmustern dazu ausgelegt ist, die Benutzervorrichtung zu veranlassen, einen Satz von Wiederholungen einer Nachricht 1 (Msg1) zum Netzwerkknoten zu übertragen, wobei jede Metrik des Satzes von Metriken mit einem Wiederholungsmuster des Satzes von Wiederholungsmustern verknüpft ist und Folgendes repräsentiert:
(i) eine Differenz zwischen zwei Werten des Parameters für einen SSB des Satzes von SSBs; oder
(ii) eine Differenz zwischen dem Wert des Parameters für einen SSB des Satzes von SSBs und dem Wert des Parameters für einen weiteren SSB des Satzes von SSBs;
Übertragen der RACH-Auslegungsinformationen zur Benutzervorrichtung; und
Empfangen des Satzes von Wiederholungen der Msg1 von der Benutzervorrichtung.

13. Verfahren zum Betreiben einer Benutzervorrichtung, das Folgendes umfasst:
Empfangen eines Satzes von Synchronisationssignalblöcken (SSBs) von einem Netzwerkknoten, wobei jeder SSB des Satzes von SSBs durch einen Parameter gekennzeichnet ist;
Empfangen von Direktzugriffskanal(RACH)-Auslegungsinformationen vom Netzwerkknoten, wobei die RACH-Auslegungsinformationen einen Satz von Wiederholungsmustern und einen Satz von Metriken umfassen, wobei jedes Wiederholungsmuster des Satzes von Wiederholungsmustern dazu ausgelegt ist, die Benutzervorrichtung zu veranlassen, einen Satz von Wiederholungen einer Nachricht 1 (Msg1) zum Netzwerkknoten zu übertragen, wobei jede Metrik des Satzes von Metriken mit einem Wiederholungsmuster des Satzes von Wiederholungsmustern verknüpft ist und Folgendes repräsentiert:
(i) eine Differenz zwischen zwei Werten des Parameters für einen SSB des Satzes von SSBs; oder
(ii) eine Differenz zwischen dem Wert des Parameters für einen SSB des Satzes von SSBs und dem Wert des Parameters für einen weiteren SSB des Satzes von SSBs;
Auswählen einer Metrik aus dem Satz von Metriken auf Basis der Differenz (i) oder (ii);
Auswählen eines Wiederholungsmusters aus dem Satz von Wiederholungsmustern auf Basis der Metrik; und
Übertragen des Satzes von Wiederholungen der Msg1 zum Netzwerkknoten auf Basis des Wiederholungsmusters.

14. Verfahren zum Betreiben eines Netzwerkknotens, das Folgendes umfasst:
Übertragen eines Satzes von Synchronisationssignalblöcken (SSBs) zu einer Benutzervorrichtung, wobei jeder SSB des Satzes von SSBs durch einen Parameter gekennzeichnet ist;
Erzeugen von Direktzugriffskanal(RACH)-Auslegungsinformationen, die einen Satz von Wiederholungsmustern und einen Satz von Metriken umfassen, wobei jedes Wiederholungsmuster des Satzes von Wiederholungsmustern dazu ausgelegt ist, die Benutzervorrichtung zu veranlassen, einen Satz von Wiederholungen einer Nachricht 1 (Msg1) zum Netzwerkknoten zu übertragen, wobei jede Metrik des Satzes von Metriken mit einem Wiederholungsmuster des Satzes von Wiederholungsmustern verknüpft ist und Folgendes repräsentiert:
(i) eine Differenz zwischen zwei Werten des Parameters für einen SSB des Satzes von SSBs; oder
(ii) eine Differenz zwischen dem Wert des Parameters für einen SSB des Satzes von SSBs und dem Wert des Parameters für einen weiteren SSB des Satzes von SSBs;
Übertragen der RACH-Auslegungsinformationen zur Benutzervorrichtung; und
Empfangen des Satzes von Wiederholungen der Msg1 von der Benutzervorrichtung.

15. Computerprogrammprodukt, das ein computerlesbares Medium umfasst, wobei das computerlesbare Speichermedium einen Computercode speichert, der, wenn er von mindestens einem Prozessor ausgeführt wird, den mindestens einen Prozessor veranlasst, das Verfahren gemäß Anspruch 13 durchzuführen.

## Revendications

1. Dispositif utilisateur comprenant :
au moins un processeur ; et
au moins une mémoire comportant un code de programme informatique ;
dans lequel l'au moins une mémoire et le code de programme informatique sont configurés pour, avec l'au moins un processeur, amener le dispositif utilisateur à au moins :
recevoir un ensemble de blocs de signaux de synchronisation (SSB) d'un nœud de réseau, chaque SSB de l'ensemble de SSB étant **caractérisé par** un paramètre ;
recevoir des informations de configuration de canal d'accès aléatoire (RACH) du nœud de réseau, les informations de configuration RACH comprenant un ensemble de motifs de répétition et un ensemble de métriques, chaque motif de répétition de l'ensemble de motifs de répétition étant configuré pour amener le dispositif utilisateur à transmettre un ensemble de répétitions d'un message 1 (Msg1) au nœud de réseau, chaque métrique de l'ensemble de métriques étant associée à un motif de répétition de l'ensemble de motifs de répétition et représentant :
(i) une différence entre deux valeurs du paramètre pour un SSB de l'ensemble de SSB ; ou
(ii) une différence entre la valeur du paramètre pour un SSB de l'ensemble de SSB et la valeur du paramètre pour un autre SSB de l'ensemble de SSB ;
sélectionner une métrique dans l'ensemble de métriques sur la base de la différence (i) ou de la différence (ii) ;
sélectionner un motif de répétition dans l'ensemble de motifs de répétition sur la base de la métrique ; et
transmettre l'ensemble de répétitions du Msg1 au nœud de réseau sur la base du motif de répétition.

2. Dispositif utilisateur selon la revendication 1, dans lequel chaque motif de répétition de l'ensemble de motifs de répétition est configuré pour amener le dispositif utilisateur à transmettre chaque répétition suivante de l'ensemble de répétitions du Msg1 en utilisant un préambule pour une répétition précédente de l'ensemble de répétitions du Msg1, mais décalée par un décalage cyclique, le décalage cyclique étant différent pour chaque motif de répétition de l'ensemble de motifs de répétition.

3. Dispositif utilisateur selon la revendication 1, dans lequel chaque motif de répétition de l'ensemble de motifs de répétition est **caractérisé par** une séquence différente de décalages cycliques, et dans lequel chaque motif de répétition de l'ensemble de motifs de répétition est configuré pour amener le dispositif utilisateur à transmettre chaque répétition suivante de l'ensemble de répétitions du Msg1 en utilisant un préambule pour une répétition précédente de l'ensemble de répétitions du Msg1, mais décalée à chaque fois par un décalage cyclique différent de la séquence de décalages cycliques.

4. Dispositif utilisateur selon la revendication 3, dans lequel la séquence de décalages cycliques a une taille de séquence, et dans lequel, si un nombre de répétitions de l'ensemble de répétitions du Msg1 est supérieur à la taille de séquence, chaque motif de répétition de l'ensemble de motifs de répétition est en outre configuré pour amener le dispositif utilisateur à lire la séquence de décalages cycliques de manière cyclique.

5. Dispositif utilisateur selon la revendication 1, dans lequel chaque motif de répétition de l'ensemble de motifs de répétition est **caractérisé par** une séquence différente de préambules, et dans lequel chaque motif de répétition de l'ensemble de motifs de répétition est configuré pour amener le dispositif utilisateur à transmettre l'ensemble de répétitions du Msg1 en utilisant au moins un préambule de la séquence de préambules.

6. Dispositif utilisateur selon la revendication 5, dans lequel chaque motif de répétition de l'ensemble de motifs de répétition amène le dispositif utilisateur à transmettre chaque répétition de l'ensemble de répétitions du Msg1 en utilisant un préambule différent de la séquence de préambules, dans lequel la séquence de préambules a une taille de séquence, et dans lequel, si un nombre de répétitions de l'ensemble de répétitions du Msg1 est supérieur à la taille de séquence, chaque motif de répétition de l'ensemble de motifs de répétition est en outre configuré pour amener le dispositif utilisateur à lire la séquence de préambules de manière cyclique.

7. Dispositif utilisateur selon la revendication 1, dans lequel chaque motif de répétition de l'ensemble de motifs de répétition est configuré pour amener le dispositif utilisateur à transmettre l'ensemble de répétitions du Msg1 en utilisant une séquence différente d'occasions RACH (RO).

8. Dispositif utilisateur selon l'une des revendications 2 à 6, dans lequel chaque motif de répétition de l'ensemble de motifs de répétition est configuré pour amener le dispositif utilisateur à transmettre l'ensemble de répétitions du Msg1 en utilisant une séquence différente de RO ou une même séquence de RO.

9. Dispositif utilisateur selon l'une des revendications 1 à 8, dans lequel les informations de configuration RACH sont présentées sous la forme d'un tableau comprenant de multiples rangées indiquant chacune une association entre un motif de répétition de l'ensemble de motifs de répétition et une métrique de l'ensemble de métriques.

10. Dispositif utilisateur selon l'une des revendications 1 à 9, dans lequel le paramètre comprend au moins un parmi un indice SSB, une puissance de réception de signal de référence (RSRP), un indicateur d'intensité de signal reçu (RSSI) et une qualité de réception de signal de référence (RSRQ).

11. Dispositif utilisateur selon l'une des revendications 1 à 10, dans lequel la procédure RACH est l'une parmi une procédure RACH à 4 étapes et une procédure RACH à 2 étapes.

12. Nœud de réseau comprenant :
au moins un processeur ; et
au moins une mémoire comportant un code de programme informatique ;
dans lequel l'au moins une mémoire et le code de programme informatique sont configurés pour, avec l'au moins un processeur, amener le nœud de réseau à au moins :
transmettre un ensemble de blocs de signaux de synchronisation (SSB) à un dispositif utilisateur, chaque SSB de l'ensemble de SSB étant **caractérisé par** un paramètre ;
générer des informations de configuration de canal d'accès aléatoire (RACH) comprenant un ensemble de motifs de répétition et un ensemble de métriques, chaque motif de répétition de l'ensemble de motifs de répétition étant configuré pour amener le dispositif utilisateur à transmettre un ensemble de répétitions d'un message 1 (Msg1) au nœud de réseau, chaque métrique de l'ensemble de métriques étant associée à un motif de répétition de l'ensemble de motifs de répétition et représentant :
(i) une différence entre deux valeurs du paramètre pour un SSB de l'ensemble de SSB ; ou
(ii) une différence entre la valeur du paramètre pour un SSB de l'ensemble de SSB et la valeur du paramètre pour un autre SSB de l'ensemble de SSB ;
transmettre les informations de configuration RACH au dispositif utilisateur ; et
recevoir l'ensemble de répétitions du Msg1 du dispositif utilisateur.

13. Procédé d'exploitation d'un dispositif utilisateur, comprenant les étapes suivantes :
recevoir un ensemble de blocs de signaux de synchronisation (SSB) d'un nœud de réseau, chaque SSB de l'ensemble de SSB étant **caractérisé par** un paramètre ;
recevoir des informations de configuration de canal d'accès aléatoire (RACH) du nœud de réseau, les informations de configuration RACH comprenant un ensemble de motifs de répétition et un ensemble de métriques, chaque motif de répétition de l'ensemble de motifs de répétition étant configuré pour amener le dispositif utilisateur à transmettre un ensemble de répétitions d'un message 1 (Msg1) au nœud de réseau, chaque métrique de l'ensemble de métriques étant associée à un motif de répétition de l'ensemble de motifs de répétition et représentant :
(i) une différence entre deux valeurs du paramètre pour un SSB de l'ensemble de SSB ; ou
(ii) une différence entre la valeur du paramètre pour un SSB de l'ensemble de SSB et la valeur du paramètre pour un autre SSB de l'ensemble de SSB ;
sélectionner une métrique dans l'ensemble de métriques sur la base de la différence (i) ou de la différence (ii) ;
sélectionner un motif de répétition dans l'ensemble de motifs de répétition sur la base de la métrique ; et
transmettre l'ensemble de répétitions du Msg1 au nœud de réseau sur la base du motif de répétition.

14. Procédé d'exploitation d'un nœud de réseau, comprenant les étapes suivantes :
transmettre un ensemble de blocs de signaux de synchronisation (SSB) à un dispositif utilisateur, chaque SSB de l'ensemble de SSB étant **caractérisé par** un paramètre ;
générer des informations de configuration de canal d'accès aléatoire (RACH) comprenant un ensemble de motifs de répétition et un ensemble de métriques, chaque motif de répétition de l'ensemble de motifs de répétition étant configuré pour amener le dispositif utilisateur à transmettre un ensemble de répétitions d'un message 1 (Msg1) au nœud de réseau, chaque métrique de l'ensemble de métriques étant associée à un motif de répétition de l'ensemble de motifs de répétition et représentant :
(i) une différence entre deux valeurs du paramètre pour un SSB de l'ensemble de SSB ; ou
(ii) une différence entre la valeur du paramètre pour un SSB de l'ensemble de SSB et la valeur du paramètre pour un autre SSB de l'ensemble de SSB ;
transmettre les informations de configuration RACH au dispositif utilisateur ; et
recevoir l'ensemble de répétitions du Msg1 du dispositif utilisateur.

15. Produit de programme informatique comprenant un support de stockage lisible par ordinateur, dans lequel le support de stockage lisible par ordinateur stocke un code informatique qui, lorsqu'il est exécuté par au moins un processeur, amène l'au moins un processeur à réaliser le procédé selon la revendication 13.
